# EUROPEAN PATENT APPLICATION

(11) **EP 2 259 563 A1**
(43) Date of publication of application: **08.12.2010**
(21) Application number: 09251446.2
(22) Date of filing: 01.06.2009
(51) Int. Cl.: H04M 1/725, H04M 1/73, H04B 1/16

(54) **Cordless telephone**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A cordless telephone system handset 2 is fitted with a radio frequency identification device (RFID) 20 and is arranged to disable its wireless connection 21 to its base station 1 after a period of disuse or in response to a low battery condition. If the handset is in this disabled connection, the co-operating base station 1 responds to an incoming call by operating an RFID scanner 10 to generate a signal for detection by the RFID 20, and the handset responds to receipt of the scanning signal by reactivating the wireless connection. To avoid delay in alerting the user to an incoming call, the handset 2 may be arranged to operate its ringtone generator in response to the RFID scan, in parallel to reestablishing the wireless link 11,21. The handset 2 may also be arranged to operate its ringtone generator 25 in response to a paging signal generated using the manual controls 1 of the base station, to allow it to be found if it has been mislaid.

## Description

This invention relates to mobile telephones and is particularly, but not exclusively, applicable to dual-mode mobile devices which can operate in both cordless and cellular mode.

A cordless telephone is one which communicates by a wireless connection to a dedicated base station which is itself connected to a conventional fixed telephone line. Calls made to or from the handset are routed by the fixed telephone network through the local exchange. The wireless connection may use any of several standards, such as DECT or wifi, or any of the emerging standards such as WGig. The base station may be part of a wireless network hub for providing intercommunication between a number of computer devices, including telephones.

A cellular telephone is one which communicates by wireless connection to one of a network of fixed base stations which are connected to a cellular switching centre. Calls made to or from the handset are routed through the cellular switching centre, and the handset's location is monitored by the network so that incoming calls can be routed to it.

In this specification the term "mobile telephone" embraces both cordless and cellular telephones, and unless the context demands otherwise, the terms "cordless telephone" and "cellular telephone" both embrace dual mode devices.

A dual-mode handset is a handset which can operate as either a cellular or cordless telephone. This allows a user to take advantage of whichever system is more advantageous (in terms of cost, signal quality, or some other criterion) when the handset is in range of base stations of both systems, without having to use two handsets. In some systems the cordless base station automatically arranges call diversion between the fixed and cellular networks according to whether it can detect the handset.

A particular problem with dual-mode handsets is that both radio systems are in use all the time the device is turned on, in order that the availability of the different wireless connections can be monitored, so that a handover can be arranged if necessary. In particular, the device searches for its wireless (cordless) connection on a periodic basis. This can drain the battery very quickly, compared to a GSM only device. In many cases this means that a device will not have battery capacity to ensure even a single working day's use, meaning that users have to find a mains supply to use the handset or to recharge the battery.

According to the invention, there is provided a cordless telephone handset having at least one wireless operating system for communicating with a base station, a usage monitor to detect usage of the handset, a passive radio frequency identification device for detecting an incoming signal, and a control system for disabling the wireless operating, and responsive to the radio frequency identification device to re-activate the wireless operating system.

The handset may further comprise a battery and a battery condition sensor, the control system being configured to disable the wireless operating system if the battery condition sensor detects the available power in the battery falling below a predetermined value.

The control system is preferably arranged to respond to an incoming signal at the radio frequency identification device by generating a ring tone. It may also respond to an incoming signal at the radio frequency identification device by establishing a wireless connection with an associated base station.

The handset may also generate a signal for transmission to the base station to indicate that the wireless operating system is disabled.

According to a complementary aspect, there is provided a base station for a cordless telephone system, having at least one wireless operating system for communicating with an associated handset, and a network interface device for establishing connection with a network, having a scanner for generating a scan signal for detection by a radio frequency identification device, and a control system for causing the scanner to operate in response to a prompt.

Preferably the control system is configured to cause the scanner to generate a scan signal in the event that the wireless operating system fails to establish communication with the handset when a call attempt is made. The control system is preferably also configured to detect a signal from an associated handset indicative that the handset is entering a dormant mode in which its wireless operating system is disabled, the control system including a data store to record whether the handset is in the dormant mode, and the control system being configured to activate the scanner if a call attempt is made and the handset is recorded as being in the dormant mode.

The scanner may also generate a scan signal in response to a user input.

According to a third aspect of the invention, there is provided a method of operating a cordless telephone system comprising a handset and a base station connectable through a wireless communications connection, wherein the handset can disable the wireless connection in response to a first predetermined condition, and the base station, in response to a second predetermined condition, generates a scanning signal for detection by a radio frequency identification device in the handset, and the handset responds to receipt of the scanning signal by reactivating the wireless connection.

The first predetermined condition may be a period of inactivity, or detection that the available power in a battery has fallen below a predetermined value. The second predetermined condition may be an incoming call received at the base station. A second scanning signal may be generated by the base station in response to a user input, the handset responding to the second scanning signal by generating a ring tone.

In a preferred embodiment, when the handset initiates the process to disable the wireless connection, it transmits a signal to the base station and the base station sets a flag indicative that the wireless connection is disabled in the handset, and if the base station receives a call from the network at a time when the flag is set, it generates the scanning signal before attempting to establish wireless communication with the handset.

Radio Frequency Identification devices (RFID) are becoming commonplace in a number of applications. They are usually passive devices, and are responsive to a signal generated by a scanning device to cause a process to be activated. In their simplest form, they simply respond to the scanning signal by returning an identification code, and are used for purposes such as stock control. More complex types can also return data such as the environmental conditions in which they, and the products to which they are attached, have been stored. As they are passive devices, and the scanners to which they are to respond are typically very close to them, their power output is very low - indeed in many applications the signals from the scanners themselves contain sufficient power to generate the signals to be transmitted by the RFID in response.

The telephone of the present invention is fitted with a Radio frequency ID device which can monitor for the receipt of a incoming RFID message and respond accordingly. The co-operating cordless base station is fitted with an RFID scanner arranged to transmit a scanning signal in response to an incoming call being made to the telephone line to which the base station is connected. If no call is made or received in a predetermined period (which may be defined by the user) the handset will shut down its wireless functions and enter a "heavy sleep" mode in which only the basic CPU and response functions are maintained in an alert mode. On receipt of a signal from a scanner in the cordless base station, the RFID responds by sending a message internally to the mobile device controller, to activate the radio functions of the handset.

When an incoming call is received at the cordless base station, (which may be, for example, a wifi hub) it responds by sending an RFID message to the appropriate handset. The message is received by the mobile device, which responds by activating its radio functions and connect to the hub, allowing the call attempt signalling to be passed to the handset and allow the handset to ring to alert the user to the incoming call. Preferably, this is done in a period of less than one ring cycle, to avoid delay in call connection. When the hub receives a response from the handset it will then connect the incoming call attempt and, subsequently, the call itself when the user answers.

Authorisation and security of the device are maintained by the hub, by sending and receiving "alive-and-well" messages to the RFID device, which can be achieved at very low battery drain levels.

When the handset enters the "deep sleep" mode, it may transmit a "going to sleep" message to the hub, so that the hub maintains its knowledge and authorisation of the mobile device without exchanging "alive and well" signals.

To make an outgoing call, the user will be able to configure the handset such that a key can be pushed to send the wake-up message to the hub. The key to be used may be pre-set, or an "any key to activate" function may be provided. This results in the maintained connection to the network being passed to the mobile device over the radio function which will have been activated by the key stroke.

The presence of an RFID in the handset allows a number of other functions to be provided. For example, it is very common for users of handsets to mislay them around the house. If it has been left switched on, and it is in wireless range, it is possible to find it by ringing its number (making a call attempt). However, if the handset is switched off (or set to "silent" ringing) this will not be possible. The RFID in the handset of the invention allows an alternative means of locating a handset. The base station can be provided with a feature that is operated either by a button operation, or via a remote control, that causes it to emit an "RFID locate Tag" message, that is associated with any of the registered handsets on the hub. Multiple handsets may be selectively paged in this way by using different keystrokes on the hub device. If within range the RFID Tag in the handset detects the message and causes the operation within the phone of an alert signal, such as continuous ringing, until a handset button is pushed.

The battery savings made by the use of the invention can be further extended and provide the additional facility of presence information when the handset is either in deep sleep or is turned off. The handset sends a message to the hub when entering deep sleep mode, or when closing down after being powered-down, or if the battery runs out of power. When the hub receives this message, it responds by sending an inquiry periodically to the RFID tag in the mobile device, the RFID tag responds and reports its presence within the range of the hub. This allows the hub to track the handset whilst in its range without using, or using very much reduced, power requirements.

The user may be able to over-ride this tracking function if he does not wish the hub to monitor his presence.

An embodiment of the invention will now be described by way of example with reference to the Figures, in which:
Figure 1 is a schematic representation of a base station according to one aspect of the invention
Figure 2 is a schematic representation of a cordless handset according to another aspect of the invention, complementary to the base station of Figure 1
Figure 3 is a flow diagram illustrating the functional interactions of the base station and handset when initiating a outgoing call
Figure 4 is a flow diagram illustrating the functional interactions of the base station and handset when the handset enters a dormant mode
Figure 5 is a flow diagram illustrating the functional interactions of the base station and handset when an incoming call is initiated.
Figure 6 is a flow diagram illustrating the functional interactions of the base station and handset when a paging function is initiated.

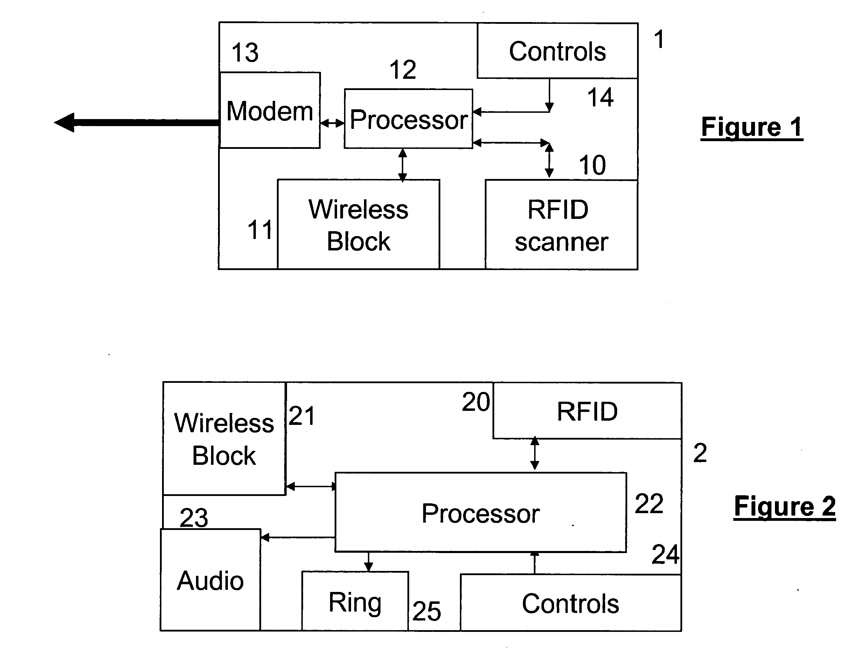

Figure 1 depicts those functional elements relevant to the invention of a base station 1. The base station may be a dedicated cordless base station, or the required functionality may be provided in a multi-purpose device, such as a computer "home-hub". Although depicted as integrated into a single device, one or more of the functions may be provided by peripheral components connected, e.g. by USB connections, to a central processing unit. Conversely, some or all of the functional elements may be integrated into a single processing unit such as an integrated circuit.

Many of the functions of the base station 1 are similar to those of a conventional base station or wireless hub. They include a wireless transceiver 11 for communication with compatible wireless devices. These may operate using any suitable standard, such as DECT or WiFi, as well as emerging standards such as WGig. There is also a modem 13 or other connection to a fixed communications link, such as a PSTN or internet connection, and an input 14 for manual controls. The input 14 may be through one or more buttons mounted on the device itself, or the input may be through a remote control unit. Input may instead be provided from a computer, through the wifi connection 11.

These functions are all interconnected and controlled through a processor 12, which also handles any translation required between protocols e.g. between the modem 13 and wifi system 11.

The base station also includes a scanner 10 for detecting RFIDs (radio frequency identification devices). This includes a transmitter to transmit a signal (either periodically, or in response to a specific command), to which any suitable RFIDs within range may respond. The scanner 10 also includes a receiver to detect such responses.

Figure 2 depicts those functional elements, relevant to the invention, of a handset 2 according to the invention. Most of the functions of the handset 2 are similar to those of a conventional wireless handset. They include a wireless transceiver 21 for communication with a compatible wireless hub or base station, using any suitable standard, such as DECT or WiFi. An audio interface 23 comprises a mouthpiece and earpiece for conversion of sound to and from electrical signals in conventional manner. The handset also includes a keypad 24 or other user input device, and a ring tone generator 25 which generates an audible signal to alert the user to incoming calls. These functions are all interconnected and controlled through a processor 22.

The handset also includes an RFID (radio frequency identification device) 20. This is a passive or very low power wireless device which generates an RF signal in response to commands received from an RFID scanner 10 (Figure 1).

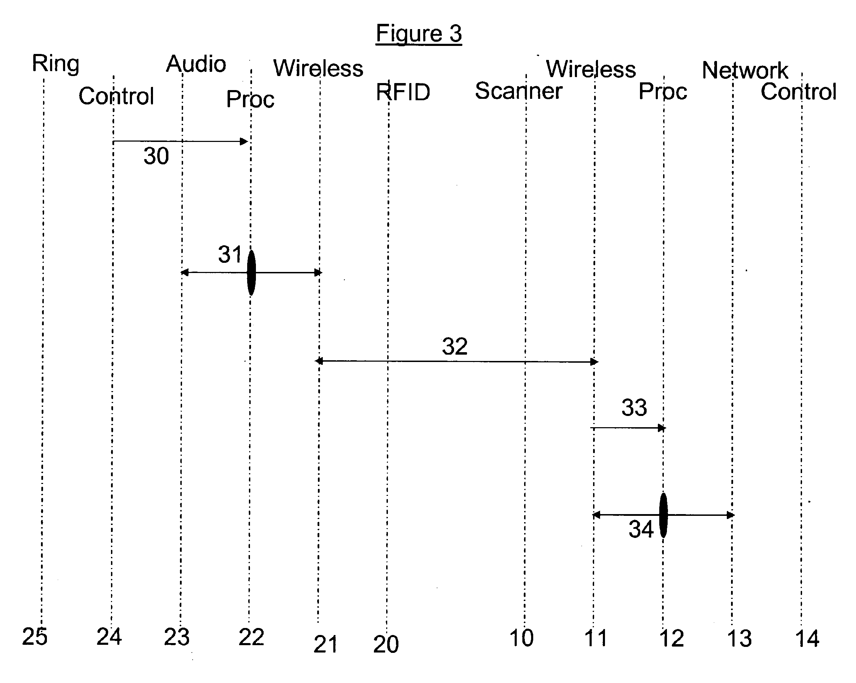

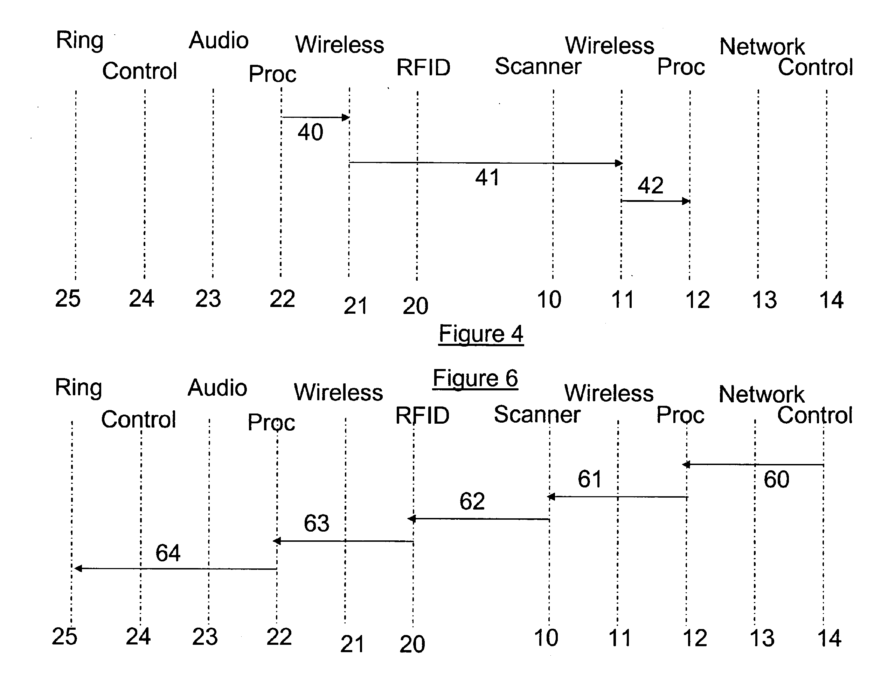

The co-operating devices 1, 2 operate as follows, and as depicted in Figures 3, 4 5 and 6.

Figure 3 is a flow diagram illustrating the functional interactions of the base station and handset when initiating a outgoing call, and is conventional. This process is initiated by the user operating the controls 24 of the handset 2 to dial a number (30). This is translated by the handset processor 22 into a set of dialled digits, and the processor 22 then sets up a connection 31 between the wireless interface 21. and audio interface 23. The wireless interface 21 in turn establishes communication 32 with the wireless interface 11 in the base station 1, and passes the call request to the base station processor 33 which attempts to set up a connection 34 between the wireless interface 11 and the network (through the modem 13). A communication link 31, 32, 34 can then be established between the audio interface 23 and the network (13).

Figure 4 is a flow diagram illustrating the functional interactions of the base station and handset when the handset enters a dormant mode. Some types of wireless handset, particularly those capable of operation in more than one mode, send periodic update signals which are intended for detection by their dedicated base stations. This is done to ensure that the base station can determine whether the handset is in range, and divert calls accordingly (e.g. to or from a cellular system). Thus a dual-mode handset will have both radio systems in use all the time the device is turned on, in order that the availability of the different wireless connections can be monitored, and a handover arranged if necessary. In particular, the device searches for its wireless (cordless) connection on a periodic basis. This can drain the battery very quickly, compared to a GSM only device. In many cases this means that a device will not have battery capacity to ensure even a single working day's use, meaning that users have to find a mains supply to use the handset or to recharge the battery. The present invention provides a process by which the handset 2 can enter a dormant mode in which power consumption is substantially reduced. If no call is made or received in a predetermined period (which may be defined by the user) the handset 2 initiates a process 40 to shut down its wireless functions and enter a "heavy sleep" mode in which only the basic CPU and response functions are maintained in an alert mode. The shut-down process may also be initiated in other circumstances, for example if the remaining battery life falls to a predetermined level.

As part of this shut-down process the handset 2 may transmit a signal 41 to the base station 1 indicating that it is entering shut-down mode, and on receipt of this signal by the wireless interface 11 in the base station the processor 12 may flag the handset as being in sleep mode (step 42). This updating of the base station 2 is optional, and may not be possible, for example if the handset is out of range of the base station when it enters sleep mode. However, having the handset 2 flagged by the base station 1 as being in sleep mode facilitates the "wake-up" process to be described with reference to Figure 6.

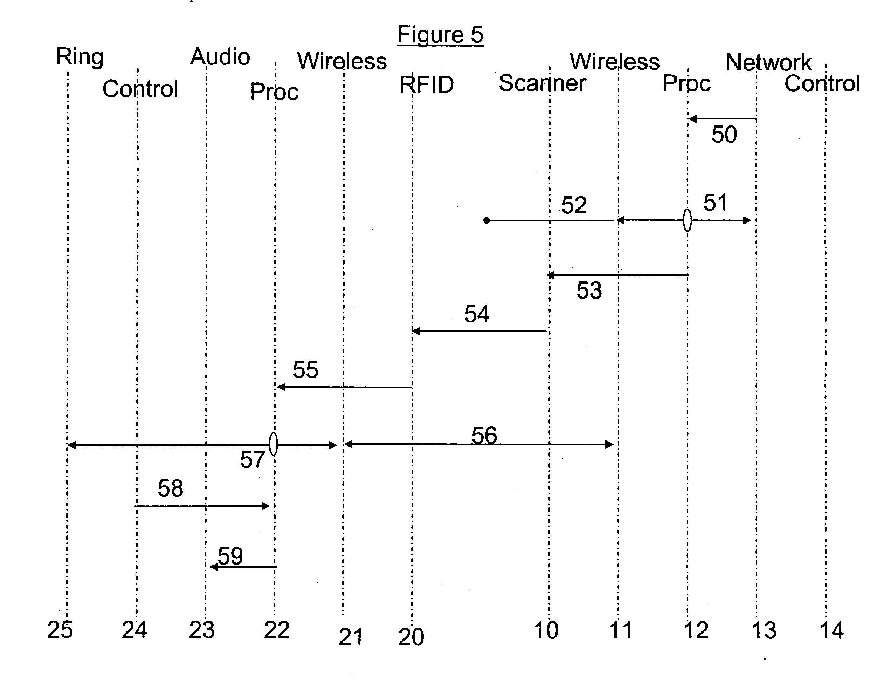

Figure 5 is a flow diagram illustrating the functional interactions of the base station and handset when an incoming call is initiated. The process differs according to whether the handset is initially in the active mode or the dormant mode, steps 52 to 55 only operating if the handset is dormant.

When the base station processor 12 detects a call attempt 50 being made to the user's network connection 13, the processor 12 establishes a connection 51 between the network connection 13 and wireless interface 11. The wireless interface then sets up a wireless connection 56 with the handset 1, which in turn initiates a call attempt by operating the ring tone generator 25 (step 57) and, if the user responds using the controls 24 (step 58), connecting the audio system 23 (step 59).

If, on making the call attempt 52, the wireless interface 11 in the base station 1 fails to receive a response from the handset 2, the processor enters a "wake up" process 53-57. This process may be initiated more promptly if the base station 1 already has the handset 2 "flagged" as dormant, as a result of the process described with reference to Figure 4, as there is then no need to perform the paging function 52 using the wireless interface 11 and that step can be omitted.

The wake up process operates under the control of the base station processor 12 which activates the RFID scanner 10 (step 53). The scanner 10 transmits a scan signal which is detected by the RFID 20 in the handset 2. The RFID 20 may return a response to the scanner 10. The RFID 22 also prompts the processor 22 in the handset 2 (step 55) to initiate a "wake-up" sequence which includes enabling the other handset functions 21, 23, 24, 25, which can then respond to the attempt 52, 56 by the base station 1 to set up the call. The sequence need not be the same as for conventional call set up: in particular the ring tone generator 25 may be activated (step 57) before the wireless connection 56 has been established, thus ensuring that the user is alerted to the incoming call as soon as possible.

If the base station 1 is associated with more than one handset, each handset would have an associated call sign to be transmitted by the scanner 10 and recognised by the RFID 20.

The presence of an RFID 20 in the handset allows a further function to be provided. Figure 6 is a flow diagram illustrating the functional interactions of the base station and handset when a paging function is initiated (the handset may be in the active or the dormant mode). This allows a user to cause the ring tone generator 25 in the handset 2 to generate a ring signal 64, even if the handset is switched off. The user activates a control 14 on the base station 1, or a remote control unit associated with it, (step 60) to cause the processor 12 to activate the RFID scanner 10 (step 61). The scanner transmits a signal 62 which is received by the RFID and causes the handset processor 22, whether in sleep mode or not, to operate the ring tone generator 25 (step 64).

The paging signal 62 transmitted to the RFID in response to the user input 60 is distinct from the signal 54 used for an incoming call, allowing the processor 22 to distinguish between the two applications. This allows the processor to over-ride any "silent" ringing command, allowing the user to find a missing handset even if call alerts have been set to silent. It can also over-ride any "call divert on no answer" or other options which would prevent the user finding the handset. Of course, if the handset 2 is out of range of the RFID scanner 10, the ringer will not operate: this should prevent the handset ringing in undesirable situations: the user can only page the handset if it is close to the base station, and the user is thus aware of whether the ringing would cause a nuisance. If the base station 1 is associated with more than one handset, each handset would have an associated "find" command to be input at the control 14 to activate the appropriate call sign from the scanner 10.

## Claims

1. A cordless telephone handset having at least one wireless operating system for communicating with a base station, a usage monitor to detect usage of the handset, a passive radio frequency identification device for detecting an incoming signal, and a control system for disabling the wireless operating, and responsive to the radio frequency identification device to re-activate the wireless operating system.

2. A cordless telephone handset according to claim 1, further comprising a battery and a battery condition sensor, and wherein the control system is also configured to disable the wireless operating system if the battery condition sensor detects the available power in the battery falling below a predetermined value.

3. A cordless telephone handset according to claim 1 or claim 2, wherein the control system is arranged to respond to an incoming signal at the radio frequency identification device by generating a ring tone

4. A cordless telephone handset according to claim 3, wherein the control system is arranged to respond to an incoming signal at the radio frequency identification device by establishing a wireless connection with an associated base station.

5. A cordless telephone handset according to any preceding claim, configured to generate a signal for transmission to the base station to indicate that the wireless operating system is disabled

6. A base station for a cordless telephone system, having at least one wireless operating system for communicating with an associated handset, and a network interface device for establishing connection with a network, having a scanner for generating a scan signal for detection by a radio frequency identification device, and a control system for causing the scanner to operate in response to a prompt.

7. A base station according to claim 6, wherein the control system is configured to cause the scanner to generate a scan signal in the event that the wireless operating system fails to establish communication with the handset when a call attempt is made.

8. A base station according to claim 6, wherein the control system is configured to detect a signal from an associated handset indicative that the handset is entering a dormant mode in which its wireless operating system is disabled, the control system including a data store to record whether the handset is in the dormant mode, and the control system being configured to activate the scanner if a call attempt is made and the handset is recorded as being in the dormant mode.

9. A base station according to claim 6, claim 7 or claim 8, wherein the control system is configured to cause the scanner to generate a scan signal in response to a user input.

10. A method of operating a cordless telephone system comprising a handset and a base station connectable through a wireless communications connection, wherein the handset can disable the wireless connection in response to a first predetermined condition, and the base station, in response to a second predetermined condition, generates a scanning signal for detection by a radio frequency identification device in the handset, and the handset responds to receipt of the scanning signal by reactivating the wireless connection.

11. A method according to claim 10 wherein the first predetermined condition is a period of inactivity.

12. A method according to claim 10, wherein the first predetermined condition is that the available power in a battery has fallen below a predetermined value.

13. A method according to claim 10, 11 or 12, wherein the second predetermined condition is an incoming call received at the base station.

14. A method according to claim 13, wherein a second scanning signal is generated by the base station in response to a user input, and the handset responds to the second scanning signal by generating a ring tone.

15. A method according to claim 13 or claim 14, wherein when the handset initiates the process to disable the wireless connection, it transmits a signal to the base station and the base station sets a flag indicative that the wireless connection is disabled in the handset, and if the base station receives a call from the network at a time when the flag is set, it generates the scanning signal before attempting to establish wireless communication with the handset.
